# EUROPÄISCHE PATENTSCHRIFT

(11) **EP 3 500 782 B1**
(45) Veröffentlichungstag und Bekanntmachung des Hinweises auf die Patenterteilung: **19.08.2020**
(21) Anmeldenummer: 17737560.7
(22) Anmeldetag: 10.07.2017
(51) Int. Cl.: F16K 37/00, F16H 61/00, F16H 57/04, F16H 61/02, F16H 61/688, H01F 7/18

(54) **VERFAHREN ZUM BETÄTIGEN EINER VENTILEINRICHTUNG IN ABHÄNGIGKEIT EINER KENNLINIE**
METHOD FOR ACTUATING A VALVE DEVICE ON THE BASIS OF A CHARACTERISTIC CURVE
PROCÉDÉ D'ACTIONNEMENT D'UN ENSEMBLE VANNE EN FONCTION D'UNE COURBE CARACTÉRISTIQUE

(30) Priorität: 16.08.2016 DE 102016215229
(43) Veröffentlichungstag der Anmeldung: 26.06.2019
(73) Patentinhaber: ZF Friedrichshafen AG, 88046 Friedrichshafen (DE)
(72) Erfinder: TERWART, Markus, 97711 Thundorf (DE); NOVAK, Rainer, 6900 Bregenz (AT); FRIEDERICH, Dirk, 88718 Daisendorf (DE)
(74) Vertreter: ZF Friedrichshafen AG
(86) Internationale Anmeldenummer: PCT/EP2017/067221
(87) Internationale Veröffentlichungsnummer: WO 2018/033302

(56) Entgegenhaltungen:
- DE-A1- 19 930 965
- DE-A1-102005 022 063
- DE-A1-102005 024 173
- DE-A1-102006 012 657
- DE-A1-102014 207 798
- US-A- 6 023 988

## Beschreibung

Die Erfindung betrifft ein Verfahren zum Betätigen einer Ventileinrichtung in Abhängigkeit einer Kennlinie gemäß der im Oberbegriff des Patentanspruches 1 näher definierten Art.

Aus der Praxis bekannte Doppelkupplungsgetriebe, an die hohe Performanceansprüche gestellt werden, sind mit einem entsprechend leistungsfähigen Kühlkonzept auszuführen. Bei solchen Getrieben wird die betriebszustandsabhängig erforderliche Kühlung nasslaufender Lamellenkupplungen eines Doppelkupplungssystems sowie weiterer Getriebekomponenten, wie beispielsweise eine Allradkupplung, mittels einer bedarfsgerechten Ansteuerung eines Kühlventils eines elektrohydraulischen Getriebesteuersystems sichergestellt. Dabei ist ein solches Kühlventil als Druckregelventil ausgebildet, wenn über das Kühlventil im Wesentlichen lediglich die Lamellenkupplungen des Doppelkupplungssystems mit Kühlöl beaufschlagt werden. Dadurch ist weitestgehend der gesamte Stellbereich zur Regulierung nutzbar, was sich positiv auf die erzielbare Genauigkeit auswirkt.

Liegen neben der Kupplungskühlung auch Anforderungen eine variable Radsatzkühlung sowie eine insgesamt bedarfsgerechte und energieverbrauchsoptimale Kühlung betreffend vor, wird das Kühlventil bekannterweise als vorsteuerbares Verteilerventil ausgebildet. Solche auch als Kühlölverteilerventil bezeichnete Kühlventile werden beispielsweise über einen elektromagnetischen Drucksteller bzw. eine elektromagnetische Vorsteuerstufe vorgesteuert, in deren Bereich in Abhängigkeit eines Betätigungsstromes und eines anliegenden Versorgungsdruckes ein Vorsteuerdruck eingestellt wird, der wiederum zur Betätigung des Kühlventils angelegt wird.

Ein ein solches Kühlölverteilerventil aufweisendes elektrohydraulisches Getriebesteuersystem ist beispielsweise aus der DE 10 2014 207 798 A1 bekannt.

Grundsätzlich ist der stationäre Zusammenhang zwischen der Eingangsgröße bzw. dem Betätigungsstrom der elektromagnetischen Vorsteuerstufe und der zugehörigen Ausgangsgröße, d. h. vorliegend jeweils die Verteilungsfaktoren des am Kühlventil anliegenden Hydraulikfluids in Richtung des Doppelkupplungssystems sowie weiterer Bereiche des Doppelkupplungsgetriebes, graphisch als sogenannte Kühlölkennlinie darstellbar, wobei unter dem Begriff Verteilungsfaktor die im Bereich des Kühlventils über die Vorsteuerung einstellbare prozentuale Aufteilung des zur Verfügung stehenden Kühlöls zwischen den zu kühlenden Komponenten bzw. Bereichen des Doppelkupplungsgetriebes verstanden wird.

Um ein Doppelkupplungsgetriebe mit möglichst hohem Wirkungsgrad betreiben zu können, ist zur hydraulischen Versorgung eine Verstellpumpe vorgesehen, über die neben dem Kühlölventil weitere hydraulische Verbraucher des Doppelkupplungsgetriebes, wie Kupplungssteller, eine Schaltaktuatorik des Doppelkupplungsgetriebes und dergleichen, mit Hydraulikfluid versorgt werden. Der Fördervolumenstrom einer solchen Verstellpumpe, der nicht für die Versorgung primärer hydraulischer Verbraucher des Doppelkupplungsgetriebes benötigt wird, wird in Richtung eines Kühl- und Schmierkreislaufes eines Doppelkupplungsgetriebes geführt und in Abhängigkeit der thermischen Anforderungen der jeweils zu kühlenden und zu schmierenden Getriebekomponenten entsprechend verteilt.

Zusätzlich ist zur Einstellung eines für den Betrieb der Verbraucher erforderlichen Systemdrucks ein sogenanntes Systemdruckventil vorgesehen, das ebenfalls über eine elektromagnetische Vorsteuerstufe angesteuert wird.

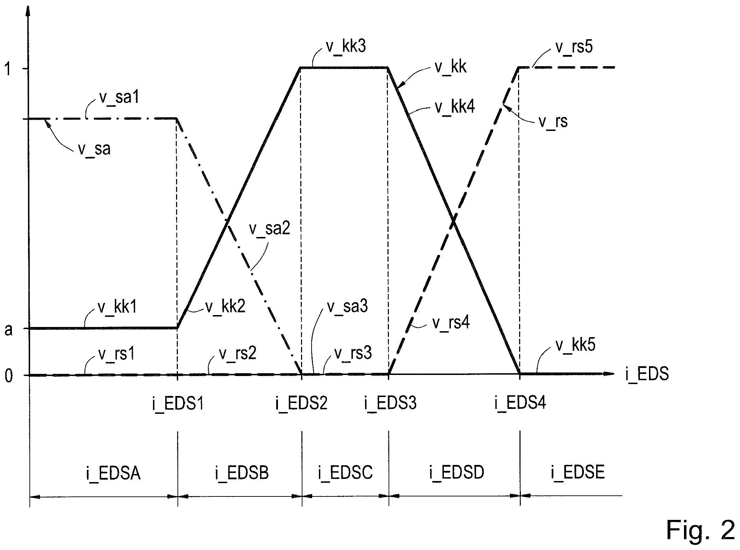

Fig. 2 zeigt Verläufe verschiedener Verteilungsfaktoren eines Kühlventils über einem Betätigungsstrom i_EDS eines dem Kühlventil zugeordneten elektrohydraulischen Druckstellers eines elektrohydraulischen Getriebesteuersystems. Im Bereich des elektrohydraulischen Druckstellers ist wiederum in Abhängigkeit des Betätigungsstroms i_EDS jeweils ein Vorsteuerdruck einstellbar, der am Kühlventil anlegbar ist und in dessen Abhängigkeit wiederum ein Ventilschieber des Kühlventils zwischen einer ersten definierten Endlage und einer zweiten definierten Endlage verschiebbar ist, um das am Kühlventil anliegende Hydraulikfluidvolumen in definiertem Umfang in Richtung der Bereiche eines Getriebes, das beispielsweise als Doppelkupplungsgetriebe ausgebildet ist, führen zu können.

Dabei gibt der Verlauf v_sa jeweils den Anteil des am Kühlventil anliegenden Hydraulikfluidvolumenstroms an, der bei dem jeweils eingestellten Betätigungsstromwert i_EDS in Richtung einer Saugaufladung einer Hydraulikpumpe des Getriebes geführt wird, während der Verlauf v_kk den Anteil des am Kühlventil anliegenden Hydraulikfluidvolumens angibt, der zu dem aktuell eingestellten Stromwert i_EDS ausgehend vom Kühlventil in Richtung eines Doppelkupplungssystems des Getriebes geführt wird. Der weitere Verlauf v_rs gibt jeweils wiederum den Anteil des am Kühlventil anliegenden Hydraulikfluidvolumenstroms über den Betätigungsstrom i_EDS des elektrohydraulischen Druckstellers an, mit dem jeweils ein Radsatz des Getriebes zur Kühlung beaufschlagt wird.

Die in Fig. 2 gezeigte Prinzipdarstellung der Verteilung des am Kühlventil anliegenden Hydraulikfluidvolumens in Richtung der Saugaufladung der Hydraulikpumpe, der Kupplungskühlung und der Radsatzkühlung über dem Betätigungsstrom i_EDS des elektrohydraulischen Druckstellers stellt einen stationären Zusammenhang zwischen dem Betätigungsstrom i_EDS und dem jeweils zugehörigen Verteilungsfaktor des Kühlventils für das zur Verfügung stehende Hydraulikfluidvolumen dar. Dabei entsprechen die Verteilungsfaktoren v_sa, v_kk und v_rs jeweils der prozentualen Aufteilung des zur Verfügung stehenden Hydraulikfluidvolumens zwischen den mit dem Hydraulikfluidvolumen zu beaufschlagenden Komponenten bzw. Bereichen des Getriebes.

Um das Kühlventil mit der angeforderten Genauigkeit ansteuern zu können, wird die stationäre Abhängigkeit vor der Auslieferung des Getriebes an einem speziellen Komponentenprüfstand ermittelt. Damit sind exemplarspezifische Toleranzen im Bereich der Vorsteuerstufe bzw. des elektrohydraulischen Druckstellers sowie geometrische und mechanische Toleranzen des elektrohydraulischen Getriebesteuersystems abbildbar. Die am Komponentenprüfstand ermittelten Daten werden in einem sogenannten Bin-File abgespeichert und im Gesamtfahrzeug passend zum verbauten Getriebe auf ein Steuergerät geflasht.

In einem ersten Zielwertbereich i_EDSA des Betätigungsstroms i_EDS zwischen einem Stromwert gleich null und einem ersten Stromwert i_EDS1 ist der Verteilungsfaktor v_rs im Wesentlichen gleich null, während die Verteilungsfaktoren v_sa und v_kk größer null sind und jeweils konstante Verläufe aufweisen. Der Verteilungsfaktor v_kk ist innerhalb des ersten Zielwertbereiches i_EDSA kleiner als der Verteilungsfaktor v_sa. Ab dem Stromwert i_EDS1 steigt der Verteilungsfaktor v_kk innerhalb eines zweiten Zielwertbereiches i_EDSB des Betätigungsstroms i_EDS mit hohem Gradienten stetig in Richtung 100 % an, während sich der Verteilungsfaktor v_sa innerhalb eines zweiten Zielwertbereiches i_EDSB des Betätigungsstroms i_EDS in gleichem Umfang in Richtung null verkleinert und der Verteilungsfaktor v_rs innerhalb des zweiten Zielwertbereiches i_EDSB im Wesentlichen gleich null ist. Vorliegend ist der Verteilungsfaktor v_kk ab einem zweiten Stromwert i_EDS2 gleich 1 bzw. 100 %. Mit weiter steigendem Stromwert i_EDS des elektrohydraulischen Druckstellers wird das am Kühlventil anliegende Hydraulikfluidvolumen im Wesentlichen vollständig in Richtung des Doppelkupplungssystems weitergeleitet.

Ab einem dritten Stromwert i_EDS3, der gemeinsam mit dem zweiten Stromwert i_EDS2 einen dritten Zielwertbereich i_EDSC des Betätigungsstroms i_EDS begrenzt, nimmt der in Richtung des Doppelkupplungssystems geführte Anteil des am Kühlventil anliegenden Hydraulikfluidvolumens stetig innerhalb eines vierten Zielwertbereiches i_EDSD des Betätigungsstromes i_EDS ab, während der Verteilungsfaktor v_rs des Kühlventils stetig ansteigt. Zu einem vierten Stromwert i_EDS4 endet der vierte Zielwertbereich i_EDSD und der Verteilungsfaktor v_rs ist dann gleich 1, während der Verteilungsfaktor v_kk den Wert null erreicht. Mit weiter steigendem Betätigungsstrom i_EDS weist der Verlauf des Verteilungsfaktors v_rs ab dem vierten Stromwert i_EDS4 innerhalb eines sich an den vierten Zielwertbereich i_EDSD anschließenden fünften Zielwertbereiches i_EDSE des Betätigungsstromes i_EDS einen konstanten Wert gleich null auf. Dabei korrespondiert der vierte Stromwert i_EDS4 mit dem Fußpunkt der Kühlölverteilung in Richtung der Kupplungskühlung bzw. der Versorgung des Doppelkupplungssystems mit Hydraulikfluidvolumen.

Die Stromwerte i_EDS1 bis i_EDS4 stellen sogenannte Stützstellen der Kennlinien der Verteilungsfaktoren v_sa, v_kk und v_rs dar, zu denen jeweils eine signifikante Änderung des Gradienten des Verlaufes des Verteilungsfaktors v_sa, des Verteilungsfaktors v_kk bzw. des Verteilungsfaktors v_rs stattfindet.

Damit ist der Stellbereich des Kühlventils bzw. des Kühlölverteilerventils in dem in Fig. 2 gezeigten Beispiel in fünf Zielwertbereiche i_EDSA bis i_EDSE des Betätigungsstromes i_EDS bzw. fünf Betriebsbereiche des Kühlventils untergliedert. Das jeweils zur Verfügung stehende Kühlöl wird über das Kühlventil gleichzeitig maximal in Richtung zwei hydraulischer Verbraucher weitergeleitet bzw. verteilt.

Im ersten Betriebsbereich des Stellbereiches des Kühlventils weisen die Verläufe v_kk, v_sa und v_rs jeweils Kennlinienbereiche v_kk1, v_sa1 und v_rs1 bzw. jeweils ein sogenanntes Plateau auf, wobei das Plateau v_kk1 des Verlaufes v_kk auf einem definierten Niveau a des Verteilungsfaktors v_kk zwischen null und 100 % liegt. An die Plateaus v_kk1 und v_sa1 der Verläufe v_kk und v_sa schließen sich über den des zweiten Zielwertbereich i_EDSB erstreckende Kennlinienbereiche bzw. erste Übergangsbereiche v_kk2 und v_sa2 der Verläufe v_kk und v_sa an, deren Gradienten entsprechend hoch sind. Innerhalb des dritten Zielwertbereiches i_EDSC bzw. des dritten Betriebsbereiches des Stellbereichs des Kühlventils weisen die Verläufe v_kk, v_sa sowie v_rs Kennlinienbereiche bzw. Plateaus v_kk3, v_sa3 und v_rs3 mit einem Gradienten gleich null auf.

Innerhalb des vierten Zielwertbereiches i_EDSD bzw. innerhalb des vierten Betriebsbereiches des Stellbereiches des Kühlventils umfassen die Verläufe v_kk und v_rs wiederum Kennlinienbereiche bzw. Übergangsbereiche v_kk4 und v_rs4 mit hohen Gradienten, während die Verläufe v_kk und v_rs innerhalb des sich an den vierten Betriebsbereich anschließenden fünften Betriebsbereich des Stellbereiches des Kühlventils jeweils Kennlinienbereich v_kk5 und v_rs5 bzw. Plateaus mit der Steigung gleich null aufweisen.

Sowohl der zweite als auch der vierte Betriebsbereich i_EDSB und i_EDSD des Stellbereichs des Kühlventils sind für eine genaue Ansteuerung des Kühlventils relevant, weshalb sie die jeweils näher zu betrachtenden Abschnitte v_kk2 und v_kk4 der Kennlinie v_kk bzw. der Kühlkennlinie definieren und lediglich ein relativ schmaler Teil des toleranzbehafteten Stellbereichs nutzbar ist. Dies hat wiederum signifikanten Einfluss auf die erzielbare Genauigkeit, denn kleine Ungenauigkeiten im Bereich der Bestromung des elektrohydraulischen Druckstellers erzeugen hohe Ungenauigkeiten im Bereich des darüber zu betätigenden Kühlventils und damit der jeweils die Ausgangsgröße darstellenden Verteilungsfaktoren v_kk, v_sa, v_rs des Kühlventils.

Der Grund dafür ist, dass die Genauigkeit des einzustellenden Verteilungsfaktors v_kk, v_sa, v_rs im betrachteten Fall von der erreichbaren Genauigkeit der verwendeten hydraulischen Vorsteuerstufe und den Toleranzen der damit angesteuerten Ventilschaltung abhängt. Die Ausgangsgröße der Vorsteuerstufe, die ein Vorsteuerdruck ist, ist bei herkömmlich ausgeführten Bauteilen stark von der Hysterese seines elektromagnetischen Kreises abhängig. Dieser Vorsteuerdruck wird mit Hilfe der Ventilschaltung letztlich in ein Wegsignal des angesteuerten Kühlventils umgesetzt. Bei dieser Druck-Weg-Wandlung können Partikelverschmutzungen im verwendeten Ölmedium aber auch Haft- und Gleitreibungseffekte zwischen dem Ventilschieber und seiner Bohrung, die durch Form- und Lagetoleranzen, Fertigungseinschlüsse auf den jeweiligen Oberflächen und dergleichen beeinflusst werden, unerwünschte Störungen in der Umsetzung des Wegsignals verursachen. Diese unerwünschten Störungen sind insbesondere bei rein gesteuerten Ventilschaltungen, also ohne interne Kopplung, von Bedeutung. Solchen Schaltungen liegt der Vorteil zugrunde, dass sie mit niedrigeren Druckniveaus betreibbar sind, wodurch bessere hydraulische Wirkungsgrade erreicht werden können.

Aktuell werden aus der elektromagnetischen Hysterese im Bereich von elektrohydraulischen Vorsteuerstufen sowie aus der Haftreibung des Nachfolgeschiebers des Kühlventils resultierende Effekte weitestgehend durch eine relativ niedrige Rate einer Chopperfrequenz von 1 kHz der Stromregelung sowie einem aktiv überlagerten Dither mit einer Frequenz von etwa 125 Hz, dem der angesteuerte Nachfolgeschieber dynamisch aber nicht folgen kann, eliminiert. Die dahinter stehende Grundidee ist das Auslösen von Mikrobewegungen im Bereich der Vorsteuerstufe, die dadurch bei gleichzeitiger Verringerung der elektromagnetischen Hysterese nicht mehr in den Haftreibungszustand einfällt.

Ist eine Genauigkeit oder eine Reproduzierbarkeit der Ansteuerung eines Kühlventils oder generell eines Ventils nicht in gewünschtem Umfang gewähleistbar, besteht die Möglichkeit, dass im Betrieb mannigfaltige Probleme auftreten. Die Probleme reichen über Komforteinbußen im Fahrereindruck und sogenannte Gangblocker bis hin zu verbrannten Kupplungen oder Lager- sowie Zahnradschäden, die jeweils durch eine unzureichende Kühlung verursacht werden und zu Getriebeausfällen sowie Reklamationen führen.

Der vorliegenden Erfindung liegt daher die Aufgabe zugrunde, ein Verfahren zum Betätigen einer Ventileinrichtung in Abhängigkeit einer Kennlinie zur Verfügung zu stellen, um eine Ventileinrichtung mit einer gewünscht hohen Genauigkeit betreiben zu können.

Erfindungsgemäß wird diese Aufgabe mit einem Verfahren mit den Merkmalen des Patentanspruches 1 gelöst.

Bei dem erfindungsgemäßen Verfahren zum Betätigen einer Ventileinrichtung in Abhängigkeit einer Kennlinie, über die jeweils ein einer Betätigungsgröße der Ventileinrichtung entsprechender Zielwert bestimmbar ist, der jeweils mit einem mit einem angeforderten Betriebszustand der Ventileinrichtung korrespondierenden Ausgangswert korreliert, wobei die Kennlinie wenigstens drei Kennlinienbereiche umfasst und ein Gradient eines zwischen einem ersten Kennlinienbereich und einem zweiten Kennlinienbereich angeordneten dritten Kennlinienbereiches jeweils größer ist als die Gradienten des ersten Kennlinienbereiches und des zweiten Kennlinienbereiches, wird die Ventileinrichtung mit einem dem Zielwert überlagernden Dither angesteuert.

Dabei wird die Frequenz derart vorgesehen, dass der Betriebszustand der Ventileinrichtung der Ansteuerung entsprechend der Kennlinie definiert folgt und über die Kennlinie jeweils die mit den Zielwerten, die jeweils zu den Umkehrpunkten der der Ventileinrichtung über den Dither aufgeprägten harmonischen Schwingung vorliegen, korrelierenden Ausgangswerte bestimmt werden, auf deren Basis jeweils weitere Ausgangswerte ermittelt werden, in deren Abhängigkeit die Betätigung der Ventileinrichtung durchgeführt wird.

Die Amplitude des Dithers wird so vorgegeben, dass einer der Umkehrpunkte bei der Ansteuerung der Ventileinrichtung nahe des Übergangsbereiches zwischen dem ersten Kennlinienbereich und dem dritten Kennlinienbereich oder zwischen dem zweiten Kennlinienbereich und dem dritten Kennlinienbereich im ersten Kennlinienbereich oder im zweiten Kennlinienbereich und der jeweils andere Umkehrpunkt im dritten Kennlinienbereich liegt.

Über die erfindungsgemäße Vorgehensweise besteht mit geringem Aufwand die Möglichkeit, Kennlinienbereiche mit hohen Gradienten abzuflachen. Da durch die Abflachung von Kennlinienbereichen eine höhere Auflösung erreicht wird, fließen die die Betätigung einer Ventileinrichtung störenden Einflüsse mit geringerer Verstärkung in die Betätigung einer Ventileinrichtung ein. Dies bewirkt eine Erhöhung der Genauigkeit einer Betätigung einer Ventileinrichtung.

Bei einer vorteilhaften Variante des erfindungsgemäßen Verfahrens stellen die jeweils für die Zielwerte ermittelten weiteren Ausgangswerte mit geringem Aufwand bestimmbare Mittelwerte dar, die auf Basis der zu den Umlenkpunkten jeweils bestimmten Ausgangswerten ermittelt werden.

Entspricht die Amplitude des Dithers bei einer Ansteuerung der Ventileinrichtung nahe des Übergangsbereiches zwischen dem ersten Kennlinienbereich und dem dritten Kennlinienbereich oder nahe des Übergangsbereiches zwischen dem zweiten Kennlinienbereich und dem dritten Kennlinienbereich jeweils maximal dem halben Zielwertbereich des Kennlinienbereiches, dessen Zielwertbereich kleiner als der Zielwertbereich des jeweils anderen angrenzenden Kennlinienbereiches ist, ist gewährleistet, dass sich für die unterschiedlichen Kennlinienbereiche durchgeführten und Genauigkeit der Ansteuerung der Ventileinrichtung erhöhenden Anpassungen nicht gegenseitig beeinflussen.

Bei einer einfach durchführbaren und mit geringem Aufwand umsetzbaren Variante des erfindungsgemäßen Verfahrens wird der Ventileinrichtung über den Dither eine harmonische und nahezu mittelwertfreie Rechteckschwingung aufgeprägt.

Umfasst die Ventileinrichtung einen ein Ventil ansteuernden elektrohydraulischen Drucksteller und entspricht der Zielwert jeweils einem Betätigungsstrom des Druckstellers, während der Ausgangswert jeweils mit einem Betriebszustand des Ventils korrespondiert, sind Hystereseeinflüsse im Bereich eines elektromagnetischen Kreises sowie Schmutzeinflüsse und Haft- sowie Gleitreibungseffekte, die eine gewünscht genaue Betätigung des Ventils beeinträchtigen, auf einfache Art und Weise reduzierbar und eine Betätigung eines Ventiles mit einer gewünscht hohen Genauigkeit durchführbar.

Ist das Ventil ein Kühlölverteilerventil, in dessen Bereich ein anliegender Hydraulikfluidvolumenstrom in Abhängigkeit des Betätigungsstroms des zugeordneten Druckstellers in Richtung verschiedener stromab des Kühlölverteilerventiles vorgesehener Bereiche mit definierten Verteilungsgraden weiterleitbar ist, wobei die Verteilungsgrade jeweils mit definierten Betriebszuständen des Kühlölventils und damit mit definierten Ausgangswerten korrespondieren, ist eine Kühlölverteilung mit einer gewünscht hohen Genauigkeit realisierbar.

Entspricht das Ventil einem zur Regelung einer Verstellpumpe vorgesehenen Ventil, in dessen Bereich ein Fördervolumenstrom der Verstellpumpe in Abhängigkeit des Betätigungsstroms eines zugeordneten Druckstellers einstellbar ist, ist der Fördervolumenstrom mit einer gewünscht hohen Genauigkeit regulierbar.

Sowohl die in den Patentansprüchen angegebenen Merkmale als auch die im nachfolgenden Ausführungsbeispiel des erfindungsgemäßen Gegenstandes angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen des erfindungsgemäßen Gegenstandes ergeben sich aus den Patentansprüchen und dem nachfolgend unter Bezugnahme auf die Zeichnung prinzipmäßig beschriebenen Ausführungsbeispiel.

Es zeigt:
Fig. 1 eine stark schematisierte Darstellung eines Fahrzeugantriebsstranges mit einer Antriebsmaschine, einem Abtrieb und einem zwischen der Antriebsmaschine und dem Abtrieb im Kraftfluss des Fahrzeugantriebsstranges angeordneten Getriebe;
Fig. 2 mehrere Verläufe von Verteilungsfaktoren eines Hydraulikfluidvolumenzuflusses eines Kühlventils des Getriebes gemäß Fig. 1 über einem Betätigungsstrom eines dem Kühlventil zugeordneten elektrohydraulischen Aktuators; und
Fig. 3 eine Gegenüberstellung zweier Verläufe, wobei der erste Verlauf einem in Fig. 2 gezeigten Verlauf entspricht, während der zweite Verlauf ein im erfindungsgemäßen Umfang angepasster Verlauf des ersten Verlaufes ist, mittels dem eine Betätigungsgenauigkeit eines Kühlventils verbessert wird.

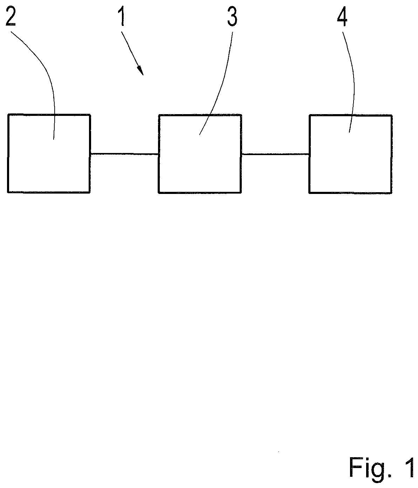

Fig. 1 zeigt eine schematisierte Darstellung eines Fahrzeugantriebsstranges 1 mit einer Antriebsmaschine 2, mit einem als Doppelkupplungsgetriebe ausgeführten Getriebe 3 und mit einem Abtrieb 4, wobei das Getriebe 3 eingangsseitig mit der Antriebsmaschine 2 und ausgangsseitig mit dem Abtrieb 4 in Wirkverbindung steht. Das Getriebe 3 ist mit einem elektrohydraulischen Getriebesteuersystem ausgeführt, das eine vorliegend als verstellbare Hydraulikpumpe ausgebildete Druckmittelquelle umfasst. Die verstellbare Hydraulikpumpe ist vorliegend als regelbare Flügelzellenpumpe ausgebildet, über die ein variierbares Fördervolumen zur Verfügung stellbar ist. Das Fördervolumen der Hydraulikpumpe ist über eine Ventileinrichtung einstellbar. Alternativ hierzu besteht auch die Möglichkeit, die Hydraulikpumpe als Konstantpumpe auszuführen, wobei deren Fördervolumen dann über die Antriebsdrehzahl variiert werden kann.

Neben der Ventileinrichtung umfasst das elektrohydraulische Getriebesteuersystem auch ein sogenanntes Systemdruckventil, in dessen Bereich ein Systemdruck in einem als Primärdruckkreis ausgeführten Druckkreis des elektrohydraulischen Getriebesteuersystems einstellbar ist, der über das Systemdruckventil mit höherer Priorität mit von der Hydraulikpumpe zur Verfügung stehendem Hydraulikfluid versorgt wird als ein ebenfalls stromab des Systemdruckventils angeordneter Sekundärdruckkreis. Sowohl über den Primärdruckkreis als auch über den Sekundärdruckkreis werden verschiedene Verbraucher des Getriebes 3 mit Hydraulikfluid versorgt, wobei über dem Primärdruckkreis u. a. Schaltelemente eines Doppelkupplungssystems des Getriebes 3 mit Betätigungsdruck beaufschlagt werden, während ein Kühl- und Schmierölsystem des Getriebes 3 über den Sekundärdruckkreis des elektrohydraulischen Getriebesteuersystems versorgt wird.

Die Hydraulikpumpe wird vorliegend direkt von der Antriebsmaschine 2 über eine Eingangswelle des Getriebes 3 angetrieben, womit die Antriebsdrehzahl der Hydraulikpumpe im Wesentlichen gleich der Drehzahl der Antriebsmaschine 2 ist. In Abhängigkeit des jeweils vorliegenden Anwendungsfalles besteht auch die Möglichkeit, dass zwischen der Getriebeeingangswelle und der Hydraulikpumpe ein Getriebe mit definierter Übersetzung vorgesehen ist, über das die Drehzahl der Antriebsmaschine 2 jeweils auf ein höheres oder ein niedrigeres Drehzahlniveau transformiert wird.

Stromab des Systemdruckventiles ist ein vorsteuerbares Kühlventil des Sekundärdruckkreises vorgesehen, über das das Systemdruckventil mit Bereichen des Getriebes 3 zum Beaufschlagen dieser Bereiche mit Hydraulikfluid in Wirkverbindung bringbar ist. Verteilungsfaktoren des im Bereich des Kühlventils vom Systemdruckventil anliegenden Hydraulikfluides in Richtung der Bereiche des Getriebes 3 variieren über dem Betriebsbereich des Kühlventils zumindest bereichsweise.

Um die erzielbare Genauigkeit zur Ansteuerung des Kühlventils zu erhöhen und folglich die beschriebenen Störungseinflüsse, wie Haft- und Gleitreibung sowie temporäre Partikelverschmutzung weitestgehend unterdrücken zu können, wird der Verlauf v_kk bzw. die Kennlinie des Kühlventils im nachstehend näher beschriebenen Umfang manipuliert.

Da Kennlinien prinzipbedingt Fußpunkte bzw. Endwerte besitzen, ist es besonders dann möglich, wenn sich an Kennlinienbereiche mit hohen Gradienten jeweils ein Plateau anschließt, in dem sich der Ausgangswert nicht mehr über den Eingangswert ändert, eine Kennlinie in eben diesen Grenzbereichen durch geeignete Ansteuerung der zugehörigen Vorrichtung zu manipulieren. Ebenso besteht die auch Möglichkeit, eine Ansteuerungsgenauigkeit über die nachfolgend beschriebene Manipulation von Kennlinien zu verbessern, die ohne ein Plateau ausgeführt sind, wenn sich jeweils Kennlinienbereiche aneinander anschließen, deren Gradienten sich wesentlich voneinander unterscheiden.

Während der zur Verbesserung der Ansteuerungsgenauigkeit des Kühlventils vorgesehenen Manipulation des in Fig. 2 gezeigten Verlaufes v_kk wird das Kühlventil mit einem dem Zielwert bzw. dem Betätigungsstrom i_EDS überlagerten, langsamen Dither, beispielweise einer harmonischen Rechteckschwingung, angesteuert. Die Frequenz des Dithers ist so langsam, dass das Kühlventil und gegebenenfalls der Verbund des elektrohydraulischen Druckstellers und des Nachfolgeschiebers des Kühlventils der durch die Kennlinie v_kk entsprechend definierten Ansteuerung folgen kann. Dies ist immer dann möglich, wenn die Ausgangsgröße des Kühlventils, z. B. das Kühlöl, der Fördervolumenstrom und dergleichen, keinen direkten Einfluss auf den Fahreindruck nimmt.

Die Amplitude des Dithers ist dabei so hoch, dass sie bei einer Ansteuerungen nahe des Übergangs i_EDS1 zwischen dem ersten Übergangsbereich v_kk2 und dem ersten Kennlinienbereich v_kk1, zwischen dem ersten Übergangsbereich v_kk2 und dem dritten Kennlinienbereich v_kk3, zwischen dem zweiten Übergangsbereich v_kk4 und dem dritten Kennlinienbereich v_kk3 oder zwischen dem zweiten Übergangsbereich v_kk4 und dem fünften Kennlinienbereich v_kk5 die Ansteuerung jeweils in das jeweils angrenzende Plateau v_kk1, v_kk3 oder v_kk5 hineinreichen lässt, um einen gewünschten, genauigkeitssteigernden Effekt zu erzielen.

Dieser entsteht dadurch, dass die durch eine harmonische Schwingung sonst nahezu mittelwertfreie Ansteuerung eben an den Grenzpunkten i_EDS1, i_EDS2, i_EDS3 und i_EDS4 der Kennlinie v_kk nicht mehr mittelwertfrei bleibt, wobei hierfür eine ausreichende Linearität der Kennlinie v_kk innerhalb der Größenordnung der doppelten Amplitude des Dithers vorausgesetzt wird.

Diese Vorgehensweise hat zur Folge, dass sich die unter anderem Fußpunkte bzw. Endwerte darstellenden Grenzpunkte i_EDS1, i_EDS2, i_EDS3 und i_EDS4 der Kennlinie v_kk bezogen auf die Ansteuerung des eigentlichen Zielwertes i_EDS verschieben. Einerseits wird der im Mittel über eine Ditherperiode eingestellte Ausgangswert bzw. der Verteilungsfaktor v_kk des Kühlventils beim Eintauchen der Halbwelle des Dithers in das jeweils angrenzende Plateau v_kk1, v_kk3 oder v_kk5 dahingehend verändert, dass sich schon der Wert des Plateaus v_kk1, v_kk3 oder v_kk5 einstellt. Andererseits wird beim Ansteuern von Zielwerten i_EDS im Plateaubereich v_kk1, v_kk3 oder v_kk5 ein Eintauchen der Halbwelle des Dithers in den Übergangsbereich v_kk2 oder v_kk4 erzielt.

Wird als Zielwert beispielsweise genau der Übergang vom dritten Kennlinienbereich v_kk3 in den vierten Kennlinienbereich v_kk4 der Kennlinie v_kk und somit der Stromwert i_EDS4 eingestellt, entspricht ein ermittelter Ausgangswert bzw. der Verteilungsfaktor des Kühlventils ohne den aufgeschalteten Dither gleich dem Wert eins. Wird dem Kühlventil der Dither überlagert, steuert die eine Halbwelle des Dithers das Kühlventil komplett im dritten Kennlinienbereich v_kk3 an und erzielt damit durchgängig den Ausgangswert bzw. den Verteilungsfaktor 1. Die andere Halbwelle des Dithers steuert das Kühlventil innerhalb des vierten Kennlinienbereich v_kk4 der Kennlinie v_kk an und erzielt durchgängig Ausgangswerte x kleiner 1. Mittelt man die Werte, erhält man den mathematischen Ausdruck (1+x) / 2. Da x kleiner 1 ist, folgt zwangsläufig, dass der gemittelte Ausgangswert des Kühlventils auch kleiner 1 ist. Dieser Effekt hält bis zu den Zielwerten i_EDS an, bis die Halbwelle des Dithers nicht mehr in den vierten Kennlinienbereich v_kk4 der Kennlinie v_kk hineinreicht.

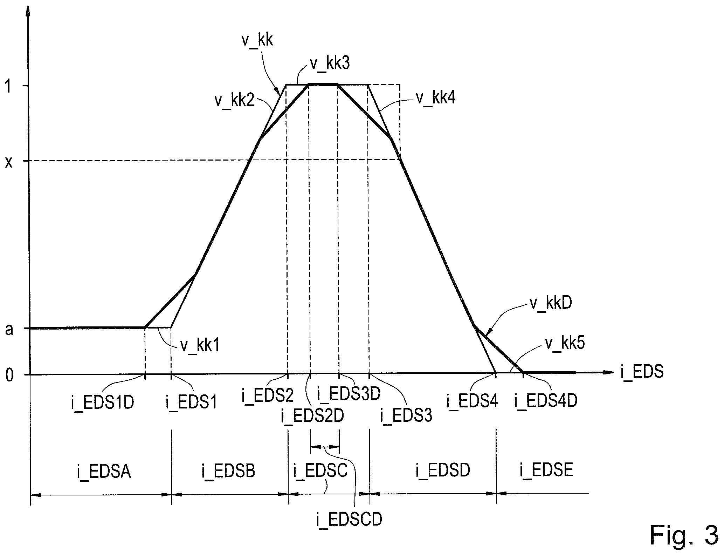

Somit kann man hierüber erreichen, dass die für die Ansteuerung sensiblen Fußpunkten bzw. Endwerte i_EDS1 und i_EDS4 für die Zielwertansteuerung nach außen wandern und sich beispielsweise der Verteilungsfaktor des Kühlventils bereits ab einem Betätigungsstromwert i_EDS1D über das Niveau a der in Fig. 3 dargestellten angepassten Kennlinie v_kkD folgend mit kleinerem Gradienten entsprechend ansteigt. Die Kennlinie v_kkD entspricht der durch die Aufschaltung des Dithers und die vorbeschriebene Ermittlung neuer Ausgangswerte angepasste Kennlinie, die auf der am Prüfstand ermittelten Kennlinie v_kk basiert.

Die weiteren Grenzwerte i_EDS2 und i_EDS3 der Kennlinie v_kk wandern durch die Aufschaltung des Dithers und die zusätzlich durchgeführte Anpassung der Kennlinie v_kk in das Plateau v_kk3 der Kennlinie v_kk hinein, womit die durch die verschobenen Grenzwerte i_EDS2D und i_EDS3D definierte Breite des Plateaus v_kk3D der angepassten Kennlinie v_kkD kleiner ist als die Breite des Plateaus v_kk3 der Kennlinie v_kk.

Über die Manipulation der Kennlinie v_kk wird die Steigung der Kennlinie v_kk zumindest bereichsweise in den Übergangsbereichen v_kk2 und v_kk4 zwischen den Plateaus v_kk1, v_kk3 und v_kk5 in gewünschtem Umfang verringert. Die durch diesen Effekt erzielte Veränderung der Kennlinie v_kk wird bei der Ansteuerung des Zielwerts i_EDS entsprechend berücksichtigt und die erzielbare Genauigkeit erhöht. Dies ist insbesondere bei der Kupplungskühlung von großer Bedeutung, da die Schleppmomente dieses Aktuators stark vom Kühlölstrom definiert werden. Ein zu geringer Kühlölstrom führt zur thermischen Schädigung der Lamellen, während ein zu großer Kühlölstrom deutlich höhere Synchronisierungskräfte beim Gangeinlegen erfordert, wodurch folglich höhere Verschleißwerte im Bereich der davon betroffenen Bauteile bewirkt werden.

Bei hohen Amplituden des Dithers und bei einer Anpassung der Kennlinie v_kk im dritten Betriebsbereich i_EDC bzw. im Bereich des mittleren Plateaus v_kk3 der Kennlinie v_kk ist die Amplitude während der vorbeschriebenen Ansteuerung des Kühlventils entweder maximal auf den halben Zielwertbereich i_EDSC des dritten Betriebsbereiches der Kennlinie v_kk zu begrenzen oder der Dither dort komplett zu deaktivieren, um Fehlansteuerungen zu vermeiden.

Da sich der Ventilschieber des Kühlventils aufgrund des überlagerten Dithers und der daraus resultierenden Ansteuerung ständig bewegt, zeigt er bei passender konstruktiver Auslegung eine gewünschte reproduzierbare Dynamik. Physikalisch ist dies mit einem sauberen Aufschwimmen des Schiebers in seiner Bohrung erklärbar, wodurch sich auch beispielsweise geringere Verschleißwerte über der Lebensdauer des Kühlventils ergeben. Die ständige Bewegung bewirkt auch eine permanente Spülung der zugehörigen Ventilspalte, wodurch auch ein besserer Wärmeübergang im Bereich der benetzten Oberflächen erreicht wird. Des Weiteren werden dadurch auch lokale Luftablagerungen effektiver ausgespült.

### Bezugszeichen

- 1: Fahrzeugantriebsstrang
- 2: Antriebsmaschine
- 3: Getriebe
- 4: Abtrieb
- a: Verteilungsfaktor
- i_EDS: Betätigungsstrom
- i_EDS1 bis i_EDS4: Stromwert, Grenzwert
- i_EDS1D bis i_EDS4D: manipulierter Stromwert
- i_EDS1 bis i_EDS4: diskreter Wert des Betätigungsstroms
- i_EDSA bis i_EDSE: Zielwertbereich, Betriebsbereich
- v_kk: Verlauf des Verteilungsfaktors in Richtung der Kupplungskühlung
- v_kk1 bis v_kk5: Kennlinienbereich
- v_kkD: manipulierter Verlauf des Verteilungsfaktors in Richtung der Kupplungskühlung
- v_kk3D: Kennlinienbereich
- v_rs: Verlauf des Verteilungsfaktors in Richtung der Radsatzkühlung
- v_rs1 bis v_rs5: Kennlinienbereich
- v_sa: Verlauf des Verteilungsfaktors in Richtung der Saugaufladung
- v_sa1 bis v_sa5: Kennlinienbereich
- x: Verteilungsfaktor

## Patentansprüche

1. Verfahren zum Betätigen einer Ventileinrichtung in Abhängigkeit einer Kennlinie (v_kk, v_kkD), über die jeweils ein einer Betätigungsgröße der Ventileinrichtung entsprechender Zielwert (i_EDS) bestimmbar ist, der jeweils mit einem mit einem angeforderten Betriebszustand der Ventileinrichtung korrespondierenden Ausgangswert der Kennlinie (v_kk, v_kkD) korreliert, wobei die Kennlinie (v_kk, v_kkD) wenigstens drei Kennlinienbereiche (v_kk1 bis v_kk5) umfasst und ein Gradient eines zwischen einem ersten Kennlinienbereich (v_kk1 oder v_kk3) und einem zweiten Kennlinienbereich (v_kk3 oder v_kk5) angeordneten dritten Kennlinienbereiches (v_kk2 oder v_kk4) jeweils größer ist als die Gradienten des ersten Kennlinienbereiches (v_kk1 oder v_kk3) und des zweiten Kennlinienbereiches (v_kk3 oder v_kk5), **dadurch gekennzeichnet, dass** die Ventileinrichtung mit einem dem Zielwert (i_EDS) überlagerten Dither mit einer solchen Frequenz angesteuert wird, dass der Betriebszustand der Ventileinrichtung der Ansteuerung entsprechend der Kennlinie (v_kk) definiert folgt und über die Kennlinie (v_kk) jeweils die mit den Zielwerten (i_EDS), die jeweils zu den Umkehrpunkten der der Ventileinrichtung über den Dither aufgeprägten harmonischen Schwingung vorliegen, korrelierenden Ausgangswerte ("1", x) bestimmt werden, auf deren Basis jeweils weitere Ausgangswerte ermittelt werden, in deren Abhängigkeit die Betätigung der Ventileinrichtung durchgeführt wird, wobei die Amplitude des Dithers so vorgegeben wird, dass einer der Umkehrpunkte bei einer Ansteuerung der Ventileinrichtung nahe des Übergangsbereiches (i_EDS1, i_EDS2, i_EDS3 oder i_EDS4) zwischen dem ersten Kennlinienbereich (v_kk1 oder v_kk3) und dem dritten Kennlinienbereich (v_kk2) oder zwischen dem zweiten Kennlinienbereich (v_kk3 oder v_kk5) und dem dritten Kennlinienbereich (v_kk4) im ersten Kennlinienbereich (v_kk1 oder v_kk3) oder im zweiten Kennlinienbereich (v_kk3 oder v_kk5) und der jeweils andere Umkehrpunkt im dritten Kennlinienbereich (v_kk2 oder v_kk4) liegt.

2. Verfahren nach Anspruch 1, **dadurch gekennzeichnet, dass** die jeweils für die Zielwerte (i_EDS) ermittelten weiteren Ausgangswerte ((1 + x)/2)) Mittelwerte darstellen, die auf Basis der zu den Umlenkpunkten jeweils bestimmten Ausgangswerten ("1", x) ermittelt werden.

3. Verfahren nach Anspruch 1 oder 2, **dadurch gekennzeichnet, dass** die Amplitude des Dithers bei einer Ansteuerung der Ventileinrichtung nahe des Übergangsbereiches (i_EDS2) zwischen dem ersten Kennlinienbereich (v_kk3) und dem dritten Kennlinienbereich (v_kk2) oder nahe des Übergangsbereiches (i_EDS3) zwischen dem zweiten Kennlinienbereich (v_kk3) und dem dritten Kennlinienbereich (v_kk4) jeweils maximal dem halben Zielwertbereich des Kennlinienbereiches (v_kk3) entspricht, dessen Zielwertbereich kleiner als der Zielwertbereich des jeweils anderen angrenzenden Kennlinienbereiches (v_kk2 oder v_kk4) ist.

4. Verfahren nach einem der Ansprüche 1 bis 3, **dadurch gekennzeichnet, dass** der Ventileinrichtung über den Dither eine harmonische und nahezu mittelwertsfreie Rechteckschwingung aufgeprägt wird.

5. Verfahren nach einem der Ansprüche 1 bis 4, **dadurch gekennzeichnet, dass** die Ventileinrichtung einen ein Ventil ansteuernden elektrohydraulischen Drucksteller umfasst, wobei der Zielwert (i_EDS) jeweils einem Betätigungsstrom des Drucksteller entspricht, während der Ausgangswert jeweils mit einem Betriebszustand (v_kk) des Ventils korrespondiert.

6. Verfahren nach Anspruch 5, **dadurch gekennzeichnet, dass** das Ventil ein Kühlölverteilerventil ist, in dessen Bereich ein anliegender Hydraulikfluidvolumenstrom in Abhängigkeit des Betätigungsstroms (i_EDS) des zugeordneten Druckstellers in Richtung verschiedener stromab des Kühlölverteilerventiles vorgesehener Bereiche mit definierten Verteilungsgraden (v_kk, v_sa, v_rs) weiterleitbar ist, wobei die Verteilungsgrade (v_kk, v_sa, v_rs) jeweils mit definierten Betriebszuständen des Kühlölventils und damit mit definierten Ausgangswerten korrespondieren.

7. Verfahren nach Anspruch 5, **dadurch gekennzeichnet, dass** das Ventil ein zur Regelung einer Verstellpumpe vorgesehenes Ventil ist, in dessen Bereich ein Fördervolumenstrom der Verstellpumpe in Abhängigkeit des Betätigungsstroms (i_EDS) eines zugeordneten Druckstellers einstellbar ist.

## Claims

1. Method for actuating a valve device as a function of a characteristic curve (v_kk, v_kkD) by means of which a respective target value (i_EDS) corresponding to an actuating variable of the valve device can be determined, which target value respectively correlates with an initial value, corresponding to a demanded operating state of the valve device, of the characteristic curve (v_kk, v_kkD), wherein the characteristic curve (v_kk, v_kkD) comprises at least three characteristic map ranges (v_kk1 to v_kk5) and a gradient of a third characteristic curve range (v_kk2 or v_kk4) arranged between a first characteristic curve range (v_kk1 or v_kk3) and a second characteristic curve range (v_kk3 or v_kk5) is respectively greater than the gradients of the first characteristic curve range (v_kk1 or v_kk3) and of the second characteristic curve range (v_kk3 or v_kk5), **characterized in that** the valve device is actuated with dither which is superposed on the target value (i_EDS) and which has such a frequency that the operating state of the valve device follows the actuation in accordance with the characteristic curve (v_kk) in a defined manner and, by means of the characteristic curve (v_kk), in each case those initial values ("1", x) which correlate with the target values (i_EDS) respectively present at the reversal points of the harmonic oscillation imparted to the valve device by means of the dither are determined, on the basis of which initial values respective further initial values are ascertained, as a function of which the operation of the valve device is performed, wherein the amplitude of the dither is predefined such that one of the reversal points, in the case of an actuation of the valve device close to the transition range (i_EDS1, i_EDS2, i_EDS3 or i_EDS4) between the first characteristic curve range (v_kk1 or v_kk3) and the third characteristic curve range (v_kk2) or between the second characteristic curve range (v_kk3 or v_kk5) and the third characteristic curve range (v_kk4), lies in the first characteristic curve range (v_kk1 or v_kk3) or the second characteristic curve range (v_kk3 or v_kk5), and the respective other reversal point lies in the third characteristic curve range (v_kk2 or v_kk4).

2. Method according to Claim 1, **characterized in that** the further initial values ((1 + x)/2)) respectively ascertained for the target values (i_EDS) constitute mean values which are ascertained on the basis of the initial values ("1", x) respectively determined at the deflection points.

3. Method according to Claim 1 or 2, **characterized in that** the amplitude of the dither, in the case of an actuation of the valve device close to the transition range (i_EDS2) between the first characteristic curve range (v_kk3) and the third characteristic curve range (v_kk2) or close to the transition range (i_EDS3) between the second characteristic curve range (v_kk3) and the third characteristic curve range (v_kk4), respectively corresponds at most to half of the target value range of the characteristic curve range (v_kk3), the target value range of which is smaller than the target value range of the respective other adjoining characteristic curve range (v_kk2 or v_kk4).

4. Method according to any of Claims 1 to 3, **characterized in that** a harmonic and approximately zero-average rectangular oscillation is imparted to the valve device by means of the dither.

5. Method according to any of Claims 1 to 4, **characterized in that** the valve device comprises an electrohydraulic pressure actuator which actuates a valve, wherein the target value (i_EDS) respectively corresponds to an operating current of the pressure actuator, whereas the initial value respectively corresponds to an operating state (v_kk) of the valve.

6. Method according to Claim 5, **characterized in that** the valve is a cooling oil distributor valve, in the region of which an incoming hydraulic fluid volume flow can, as a function of the actuating current (i_EDS) of the associated pressure actuator, be conducted onward with different degrees of distribution (v_kk, v_sa, v_rs) in the direction of different regions provided downstream of the cooling oil distributor valve, wherein the degrees of distribution (v_kk, v_sa, v_rs) respectively correspond to defined operating states of the cooling oil valve and thus to defined initial values.

7. Method according to Claim 5, **characterized in that** the valve is a valve provided for the closed-loop control of a variable-displacement pump, in the region of which valve a delivery volume of the variable-displacement pump can be adjusted as a function of the actuating current (i_EDS) of an associated pressure actuator.

## Revendications

1. Procédé d'actionnement d'un dispositif de soupape en fonction d'une courbe caractéristique (v_kk, v_kkD) par le biais de laquelle une valeur cible (i_EDS) correspondant à une grandeur d'actionnement du dispositif de soupape peut à chaque fois être déterminée, laquelle valeur cible est à chaque fois corrélée à une valeur de sortie de la courbe caractéristique (v_kk, v_kkD) correspondant à un état de fonctionnement exigé du dispositif de soupape, la courbe caractéristique (v_kk, v_kkD) comprenant au moins trois régions de courbe caractéristique (v_kk1 à v_kk5) et un gradient d'une troisième région de courbe caractéristique (v_kk2 ou v_kk4) disposée entre la première région de courbe caractéristique (v_kk1 ou v_kk3) et une deuxième région de courbe caractéristique (v_kk3 ou v_kk5) étant à chaque fois supérieur aux gradients de la première région de courbe caractéristique (v_kk1 ou v_kk3) et de la deuxième région de courbe caractéristique (v_kk3 ou v_kk5), **caractérisé en ce que** le dispositif de soupape est commandé avec un dither superposé à la valeur cible (i_EDS) avec une fréquence telle que l'état de fonctionnement du dispositif de soupape suive de manière définie la courbe caractéristique (v_kk) en fonction de la commande et que, par le biais de la courbe caractéristique (v_kk), les valeurs de sortie ("1", x) corrélées avec les valeurs cibles (i_EDS) qui sont présentes à chaque fois aux points d'inversion de l'oscillation harmonique appliquée par le biais du dither au dispositif de soupape soient à chaque fois déterminées, sur la base desquelles valeurs de sortie sont à chaque fois déterminées des valeurs de sortie supplémentaires en fonction desquelles est effectué l'actionnement du dispositif de soupape, l'amplitude du dither étant prédéfinie de telle sorte que l'un des points d'inversion, dans le cas d'une commande du dispositif de soupape, soit situé à proximité de la région de transition (i_EDS1, i_EDS2, i_EDS3 ou i_EDS4) entre la première région de courbe caractéristique (v_kk1 ou v_kk3) et la troisième région de courbe caractéristique (v_kk2) ou entre la deuxième région de courbe caractéristique (v_kk3 ou v_kk5) et la troisième région de courbe caractéristique (v_kk4) dans la première région de courbe caractéristique (v_kk1 ou v_kk3) ou dans la deuxième région de courbe caractéristique (v_kk3 ou v_kk5) et que l'autre point d'inversion respectif soit situé dans la troisième région de courbe caractéristique (v_kk2 ou v_kk4).

2. Procédé selon la revendication 1, **caractérisé en ce que** les valeurs de sortie supplémentaires ((1+x)/2)) déterminées à chaque fois pour les valeurs cibles (i_EDS) constituent des valeurs moyennes qui sont déterminées sur la base des valeurs de sortie ("1", x) déterminées à chaque fois au niveau des points de déviation.

3. Procédé selon la revendication 1 ou 2, **caractérisé en ce que** l'amplitude du dither dans le cas d'une commande du dispositif de soupape à proximité de la plage de transition (i_EDS2) entre la première région de courbe caractéristique (v_kk3) et la troisième région de courbe caractéristique (v_kk2) ou à proximité de la région de transition (i_EDS3) entre la deuxième région de courbe caractéristique (v_kk3) et la troisième région de courbe caractéristique (v_kk4) correspond à chaque fois au maximum à la moitié de la plage de valeurs cibles de la région de courbe caractéristique (v_kk3) dont la plage de valeurs cibles est inférieure à la plage de valeurs cibles de l'autre région de courbe caractéristique respective adjacente (v_kk2 ou v_kk4).

4. Procédé selon l'une quelconque des revendications 1 à 3, **caractérisé en ce qu'**une oscillation rectangulaire harmonique et pratiquement sans valeur moyenne est appliquée par le biais du dither au dispositif de soupape.

5. Procédé selon l'une quelconque des revendications 1 à 4, **caractérisé en ce que** le dispositif de soupape comprend un régulateur de pression électrohydraulique commandant une soupape, la valeur cible (i_EDS) correspondant à chaque fois à un courant d'actionnement du régulateur de pression, tandis que la valeur de sortie correspond à chaque fois à un état de fonctionnement (v_kk) de la soupape.

6. Procédé selon la revendication 5, **caractérisé en ce que** la soupape est une soupape de distribution d'huile de refroidissement dans la région de laquelle un débit volumique de fluide hydraulique appliqué peut être transféré en fonction du courant d'actionnement (i_EDS) du régulateur de pression associé dans la direction de différentes régions prévues en aval de la soupape de distribution d'huile de refroidissement avec des degrés de distribution définis (v_kk, v_sa, v_rs), les degrés de distribution (v_kk, v_sa, v_rs) correspondant à chaque fois à des états de fonctionnement définis de la soupape d'huile de refroidissement et par conséquent à des valeurs de sortie définies.

7. Procédé selon la revendication 5, **caractérisé en ce que** la soupape est une soupape prévue pour la régulation d'une pompe de réglage dans la région de laquelle peut être ajusté un débit volumique de refoulement de la pompe de réglage en fonction du courant d'actionnement (i_EDS) d'un régulateur de pression associé.
